Europäisches Patentamt

**European Patent Office**

**Office européen des brevets**

(19)

(11) Publication number: **0 094 522**
**A2**

(12) **EUROPEAN PATENT APPLICATION**

(21) Application number: **83103927.6**

(22) Date of filing: **26.11.80**

(51) Int. Cl.³: **G 01 B 11/02**

(30) Priority: **19.03.80 GB 8009285**
**25.03.80 GB 8010048**

(43) Date of publication of application:
**23.11.83 Bulletin 83/47**

(84) Designated Contracting States:
**AT BE CH DE FR GB IT LI LU NL SE**

(60) Publication number of the earlier application
in accordance with Art. 76 EPC: **0 029 748**

(71) Applicant: **European Electronic Systems Limited**
**Woodham Mortimer Place Rectory Lane**
**Woodham Mortimer Nr. Maldon Essex CM9 6SW(GB)**

(72) Inventor: **Loose, Peter William**
**11 Longstomps Avenue**
**Chelmsford Essex(GB)**

(74) Representative: **Messulam, Alec Moses**
**A. Messulam & Co. 24 Broadway**
**Leigh on Sea Essex SS9 1BN(GB)**

(54) **Edge detection.**

(57) The invention describes a method of edge detection to locate the position of an edge by scanning an array of discrete photo-sensitive elements onto which the edge is imaged. The position of the precise location of the image of the edge on the array is found by identifying the value of signal at which the rate of change is a maximum, finding on each side of this signal the signals at which the rate of change of the signals falls to a predetermined fraction of this maximum value, finding the mean of the last two signals and identifying by interpolation the position of the edge to an accuracy better than one inter-element spacing.

FIG.4.

## EDGE DETECTION

The invention relates to a method of determining the precise location of an edge of a strip by means of remote scanning.

It has already been proposed to measure the width of a steel strip as it is being rolled in a rolling mill by the use of sensors disposed above the strip. In copending European Patent Application No. 80304249.8 two cameras are disposed above the strip. The cameras each determine the location of both edges of the strip and from a knowledge of the position of the cameras it is possible to compute the width of the strip.

In order to be able to determine the position of the edges of the strip accurately, use has been made, for example, of a charge coupled device camera having a large number of sensing elements. The elements or photosites of the charge coupled device are electronically scanned to generate an output consisting of a series of pulses having heights representing a line scan across the strip.

One way of determining the position of the edge of an object is to determine the point of maximum slope of the video signal. However, because of the fact that the line scan is not continuous but consists of discrete samples it is not possible to determine the point of maximum slope on the curve with an accuracy greater than one inter-element spacing.

The present invention seeks to provide a method of determining the location of an edge by remote scanning using an array of radiations sensitive elements with an accuracy better than one inter-element spacing.

In accordance with the present invention, there is provided a method of locating the edge of a strip which comprises forming an image of the strip at least in the region of the edge on a sensor composed of a series of radiation responsive elements, scanning the said image with the said elements, each element generating in each scan a discrete signal the level of which is dependent upon the level of radiation incident upon the element, the discrete signals from the elements in each scan constituting a line of data representing points on a radiation profile of the scanned region at locations corresponding to the positions of the elements of the sensor, storing the discrete signals of each line in separate memory locations, processing the discrete signals to identify a first discrete signal at which the rate of change of signals is a maximum, identifying on opposite sides of the first discrete signal two further discrete signals where the rate of change of signals is a predetermined fraction of the maximum, forming the mean of said second discrete signals and generating from the mean an output signal indicating the position of the edge to an accuracy exceeding the inter-element spacing by interpolation between the discrete signals.

In order to determine the position of the edge accurately it is necessary to do a substantially amount of computing and if a sensor with a large number of elements is used in order to achieve the required resolution the amount of processing required is difficult to achieve in real time.

In order to mitigate this problem, in a preferred embodiment of the invention, the line scan stored in memory is analysed to determine crossings of a predetermined threshold, areas of interest are defined about the said crossings and the video signal is analyzed only within the defined areas of interest in order to identify and locate edges of the strip.

In U.S. Patent Specification No. 3,941,484 there is described a method of edge detection in which the object is viewed in coherent light and the signals resulting from Fresnel diffraction are analysed to find the location where the light intensity is 25% of its value in the absence of the object. The above Patent cannot find application in the context of measurement of a steel strip where the size of the object precludes the possiblity of using a coherent collimated light beam. Furthermore, the Patent does not assist in improving the resolution since it is still difficult to locate the position of the edge to an accuracy greater than on element spacing.

The invention will now be described further , by way of example, with reference to the accompaying drawings, in which:

Figure 1 is a schematic representations of a known electro-optical distance measurement system,

Figure 2 is a similar representation of a second distance measurement system,

Figure 3 is a profile of the radiation emitted by a rolled sheet of steel,

Figure 4 is a detail of the video signal produced from a video array showing only the part encircled in Figure 3,

Figure 5 is a block diagram of an arrangement for accurate edge detection and,

Figure 6 shows two cameras arranged above a calibration grid.

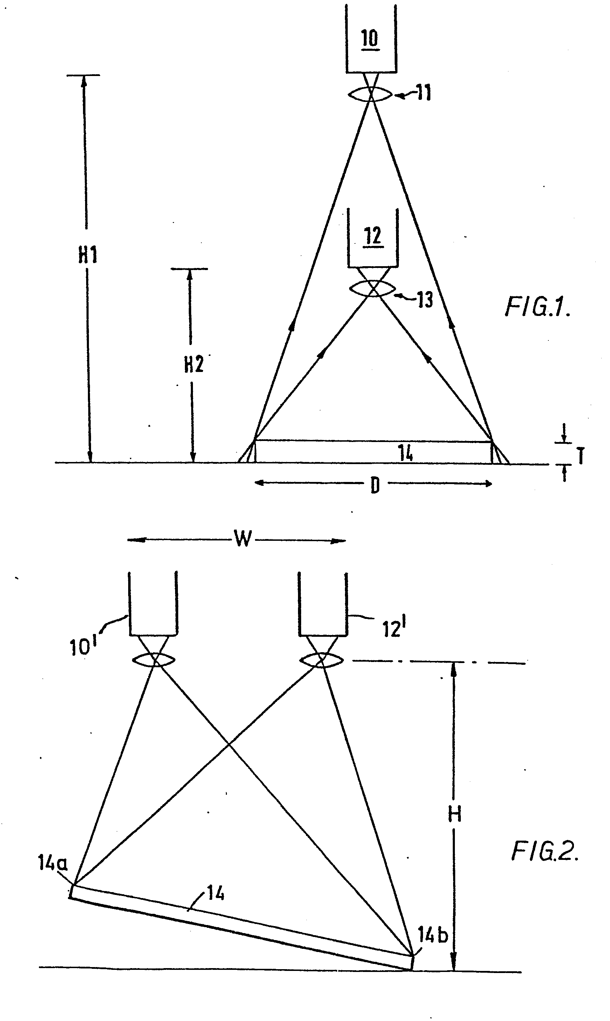

The system described in Figure 1 is intended to measure the width D and the thickness T of a strip 14 being rolled. The optical measurement system includes a first charge coupled device 10 mounted with its focussing system 11 a distance H1 above the plane on which the object 14 rests and a second charge-coupled device 12 mounted with its imaging system 13 a distance H2 above the plane on which the object 14 rests. The purpose of the equipment is to measure the width D of the strip 14 and its thickness T. This can be carried out in a known way from the measurements made by the charge-coupled devices 10 and 12.

If the strip 14 is a light emitter or a light reflector, its image can be sensed directly by the charge coupled devices 10 and 12, but alternatively a light source may be positioned beneath the strip 14 to measure the dimensions of the shadow. Knowing the distances H1 and H2, the sizes of the images on the charge coupled devices and the magnifications of the imaging systems the dimensions D and T can be computed in a known way.

In the system shown in Figure 1, the distance H1 may need in some cases to be as much as two metres and this has been found to be inconvenient in certain applications. Furthermore, the measuring system employed in the embodiment of Figure 1 assumes that the strip 14 being rolled is resting upon the bed of the rolling mill and this in practice may not be the case, it being common for one edge of the strip to lift off.

The system in Figure 2, shown very schematically, disposes the two cameras 10' and 12' at a known height H above the bed of the rolling mill and at a known distance W apart. Each edge of the strip is capable of being viewed simultamenously by both of the cameras. The method of computation in this embodiment, however, differs from that previously described. In place of assuming that the strip 14 is resting on the bed, the location in space of each of the edges 14a and 14b is calculated. This is a simple problem analogous to that solved in any navigation system wherein the location of a point is determined by taking bearings from two known points. Each of the cameras 10' and 12' provides a bearing and the point of intersection is a unique point in space the co-ordinates of which can readily be calculated.

If the points 14a and 14b are found to lie in a different horizontal plane from one another, the distance the points 14a and 14b is determined within conventional analytical geometry and it is then possible to complete the co-ordinates of the edges 14a and 14b if the strip is bent back to assume a horizontal position resting on the bed.

The accuracies of the measurements in any system depend on the quality of the optical systems 11 and 13 which are shown only schematically in the drawings as consisting of a convex lens each. The cost of very high quality optics is extremely high and consequently the accuracy of the measurement is limited by the quality of the optical systems.

With a view to improving the accuracy of such a system without significantly increasing the cost, it is possible to place a grid in the position of the strip 14 in order to calibrate the system.

To implement this technique, the dimensions of the image produced by lines having a predetermined distance apart are stored in a memory and the contents of the memory are read during operation in order to compensate for inaccuracies in the known system. Such a method of compensation can readily be performed by digital microprocessor but it is alternatively possible to feed

the output of each charge coupled device to a function generator having a function predetermined during the calibration procedure to correct the inaccuracies resulting from the measurement system. The correction function may simply involve linear interpolation between two points measured during calibration but alternatively the function may be more complicated employing functions of higher orders to form a curve defining a best fit with the points measured during calibration. In the latter case, an analogue computation technique is involved which is believed evident to a person skilled in the art.

As in the arrangement of Figure 2, readings are not only taken when the strip 14 is resting on the bed, but also when the edges are raised above it, the calibration of the lenses should be performed by placing the calibration grid in more than one horizontal position during the calibration process in order to correct for aberrations in all the different planes of measurement.

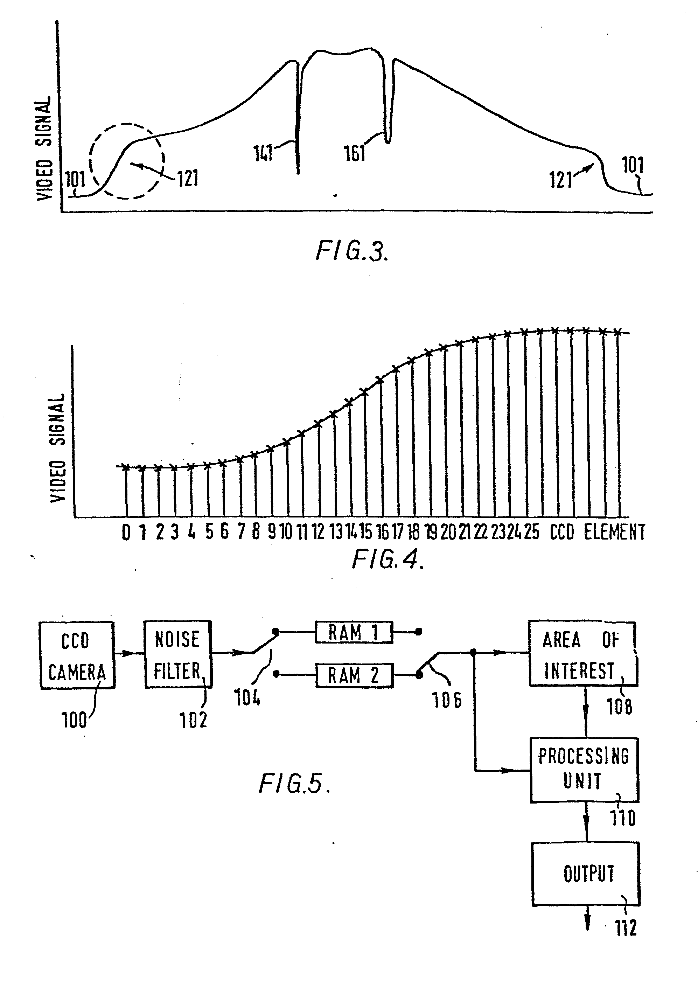

Figure 3 shows the profile produced on a video camera array when viewing a sheet of rolled steel. The minimum values 101 on the left and right of the graph indicate the background radiation. At the edges 121 the video signal is generally in the form of a half sinusoid with the maximum rate of change corresponding to the edge. The maximum value of the half sinusoidal does not correspond to the maximum radiation since the edge of a rolled strip tends to be cooler than the centre, thus there continues a gradient towards the centre of the strip. The deep spikes 141 and 161 shown are effects of local cooling which can be caused by water droplets and the general profile will itself be affected by the cooling of the press roller. The area of importance for the present application is the circled part, since it is necessary to detect this edge in order to be able to measure the width of the rolled strip accurately.

Figure 4 shows the edge drawn to a much enlarged scale showing the idealised video signal from a charge coupled device viewing the edge. Because the video signal is sampled at spaced intervals by such an array, the maximum rate of change of the video signal cannot be measured directly to an accuracy in excess of one interelement spacing. Further processing cannot however readily be performed in real time because of the large number of elements in a charge coupled device and therefore it is proposed initially that an area of interest be identified and selected from the whole of the video signal for the purpose of analysis. In the case of the profile in Figure 3, this can be achieved by measuring the video signal intensity at the top of the half sinusoid and fixing a threshold level equal to say, half this value as indicative of the likely position at an edge. A memory now stores the video signals from the elements of the array immediately adjacent the crossing of this threshold value and stores only such values for further processing. By reducing the number of elements to be analysed in this way, it is possible to perform the analysis in real time.

In the profile shown in Figure 3, only three areas will be identified as being of interest, two being the true edges 121 of the strip and one being the spike 141 caused by water droplet. Because of the obvious differences in two signals one can readily distinguish the true edges from such spikes.

To enable detection of the point of maximum rate of change, the two elements at which the rate of change is a maximum are first identified. This could, for example, be the elements numbered 13 and 14 in Figure 4. Subsequently, the two elements at which the rate of change drops to a quarter of this maximum value are detected by analysing the video signals from the elements on each side of the maximum rate of change. By averaging the video signal at these locations it is possible to provide a more accurate assessment of the true position of the point of maximum rate of change and therefore the edge of the strip. By experiment, various fractions of the maximum rate of change have been tried, that is to say a quarter, a third, a half, and in each case the averages were in agreement to an accuracy of one tenth of the interelement spacing. The actual fraction adopted is therefore not critical but approximately a quarter has been found to be the most expedient.

It should here be mentioned that the signal shown in Figure 4 is a signal which has been cleaned from various interfering noises. For example, each charge coupled device has a characteristic random noise associated with it, often termed the signature as each signature is peculiar to a given device. This signal must first be removed, for example by viewing a neutral background, measuring the noise signal and substracting it from any subsequent measurements made during operation.

It is also inherent in the construction of a charge coupled device that the gain may vary from one element to the next but that alternate elements are matched. Therefore, to avoid the superimposition of a signal having a wavelength related to the interelement spacing, the signals from alternate elements are analysed separately.

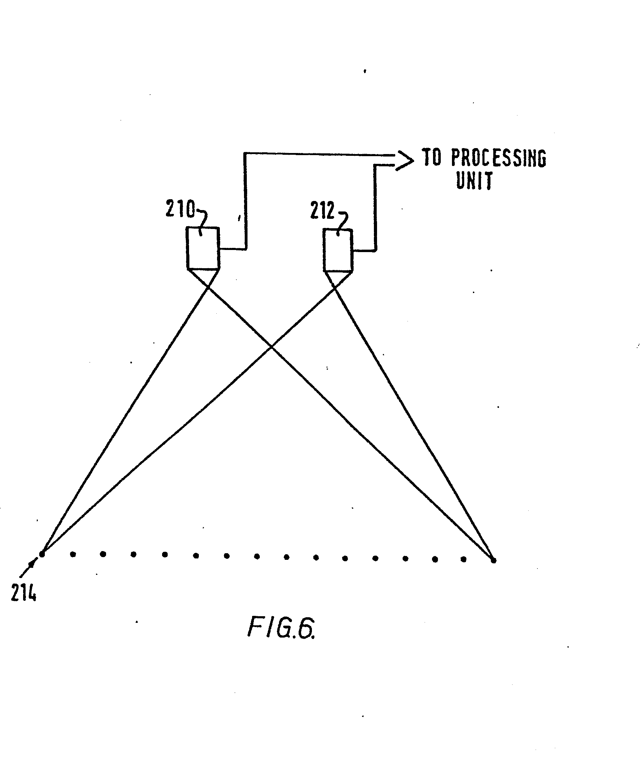

In Figure 5, a charge coupled device camera 100 is connected to a noise filter 102 which removes the sources of noise mentioned hereinbefore. The video signal is applied by an electronic switch 104 alternately to two random access memories RAM1 and RAM2. While the signal is being written into RAM1 the video signal from the preceding line is read from RAM2 and vice cersa. An area of interest processing unit 108 is connected alternately to the random access memories RAM1 and RAM2 by means of an electronic switch 106 which operates in synchronism with the switch 104. The area of interest circuit 108 determines a threshold which corresponds to likely positions of an edge and enters that information into a main processing unit 110. The main processing unit now examines the video signal in the random access memory in the vicinity of each area of interest in accordance with the principle described above to determine the position of the maximum rate of change of the video signal and after further processing provides an output from an output unit 112.

In Figure 6, two cameras 10 and 12 are arranged side by side one another above a calibration grid 14 which is arranged in a position corresponding to that adopted by a rolled strip when the system is in operation. It is desired to combine the individual outputs of the two cameras of the stereo system without resorting to trigonometrical computations in order to determine the accurate positioning in space of the edges of the strip being rolled.

During the initial setting up of the two camera stereo system, which is connected, as described above to a processing unit serving to determine the accurate positions of the edges of the rolled strip, the calibration grid is placed at an accurately measured position relative to the stereo camera system. The video signals derived during this calibration phase are entered into a memory of the processing unit connected to the cameras so as to form a look-up table assigning to each position known in space from the positioning of the calibration grid two co-ordinates corresponding to the positions on the two cameras on which the image of the said point in space is incident. After recording the pairs of co-ordinates for all the lines on the calibration grid at a first spacing of the grid from the camera, the grid is moved to a new position and a

- 10 -                                   0094522

further set of calibration values is determined, this process being continued to form a matrix of points in space for which the co-ordinates (as defined above) are recorded in the memory as a look-up table.

After the calibration of a camera system, which need not be done on site, the processing unit determines the position of an edge during operation by interpolation. Any point falling generally within the matrix of calibration points will fall within a square or rectangle, the corners of which have known co-ordinates. By linear interpolation of the values within that square, involving only simple sums of addition and multiplication which may be done rapidly, it is possible to compute the exact position of the edge when lying at any point falling within the calibration matrix.

Reference is made to copending European Application No. 80304249.8 which contains the same disclosure as the present specification.

## CLAIMS

1. A method of locating the edge of a strip which comprises forming an image of the strip at least in the region of the edge on a sensor composed of a series of radiation responsive elements, scanning the said image with the said elements, each element generating in each scan a discrete signal the level of which is dependent upon the level of radiation incident upon the element, the discrete signals from the elements in each scan constituting a line of data representing points on a radiation profile of the scanned region at locations corresponding to the positions of the elements of the sensor, storing the discrete signals of each line in separate memory locations, characterised by the steps of processing the discrete signals to identify a first discrete signal at which the rate of change of signals is a maximum, identifying on opposite sides of the first discrete signal two further discrete signals where the rate of change of signals is a predetermined fraction of the maximum, forming the mean of said second discrete signals and generating form the mean signal an output signal indicating the position of the edge to an accuracy exceeding the inter-element spacing by interpolation between the discrete signals.

2. A method as claimed in claim 1, wherein the line scan stored in memory is analysed to determine crossings of a predetermined threshold, areas of interest are defined about the said crossings and the video signal is analyzed only within the defined areas of interest in order to identify and locate edges of the strip.

3. A method as claimed in claim 2, wherein consecutive line scans are stored alternately in two memories connected such that while data is being stores in one of the memories, the data stored in the other memory is analysed.

FIG.1.

FIG.2.

FIG.3.

0 1 2 3 4 5 6 7 8 9 10 11 12 13 14 15 16 17 18 19 20 21 22 23 24 25  CCD ELEMENT

FIG.4.

FIG.5.

TO PROCESSING
UNIT

210

212

214

*FIG.6.*